# EUROPEAN PATENT SPECIFICATION

(11) **EP 2 757 678 B1**
(45) Date of publication and mention of the grant of the patent: **28.11.2018**
(21) Application number: 14150648.5
(22) Date of filing: 09.01.2014
(51) Int. Cl.: H02M 7/487

(54) **SYSTEM AND METHOD FOR POWER CONVERSION**
SYSTEM UND VERFAHREN ZUR LEISTUNGSUMWANDLUNG
SYSTÈME ET PROCÉDÉ DE CONVERSION DE PUISSANCE

(30) Priority: 16.01.2013 CN 201310016219
(43) Date of publication of application: 23.07.2014
(73) Proprietor: General Electric Company, Schenectady, NY 12345 (US); GE Energy Power Conversion France SAS, 91345 Massy (FR)
(72) Inventor: Zhu, Yi, Shanghai 201203 (CN); Zhang, Fan, Shanghai 201203 (CN); Schroeder, Stefan, 85748 Garching bei München (DE); Shen, Jie, 85748 Garching bei München (DE); Zhang, Richard, 75007 Paris (FR); Soua, Samir, 81345 Massy (FR)
(74) Representative: Serjeants LLP

(56) References cited:
- EP-A1- 2 372 893
- EP-A1- 2 525 484
- EP-A1- 2 763 300
- EP-A2- 2 816 719
- AU-A1- 2010 202 115
- US-A- 6 072 707
- US-A1- 2007 223 258

## Description

### BACKGROUND

Embodiments of the disclosure relate generally to systems and methods for power conversion.

At least some known converters have been used as power conversion device for converting power from one form to another. In particular, multi-level converters are increasingly used for performing power conversion in a wide range of applications due to the advantages of high power quality waveform and high voltage capability. For example, multi-level converters or multi-level inverters are being used in industrial areas, including but not limited to, petro-chemistry, papermaking industry, mine, power plant, and water treatment plant, to provide electric power (e.g., AC electric power) for driving one or more loads such as AC electric motor.

In general, the converters are constructed to have a particular topology, such as three-level NPC topology, two phase H-bridge cascaded topology, and so on. However, these topologies used in the converters still cannot provide ideal input/output waveforms. Therefore, it is desirable to provide systems and methods with new or improved topology to address one or more of the above-mentioned limitations of current systems and methods.

EP 2525484 discloses a power converter with a first converter module and a second converter module coupled to the first converter module in a nested manner. Each of the first and second converter modules includes a plurality of switch units.

### BRIEF DESCRIPTION

The present invention provides a converter with a nested neutral point piloted (NPP) topology according to claim 1.

The present invention further provides a method for driving a converter according to claim 11.

### DRAWINGS

These and other features, aspects, and advantages of the present disclosure will become better understood when the following detailed description is read with reference to the accompanying drawings in which like characters represent like parts throughout the drawings, wherein:
FIG. 1 illustrates a block diagram of a system in accordance with an exemplary embodiment of the present disclosure;
FIG. 2 illustrates a detailed diagram of a converter of the system shown in FIG. 1 in accordance with an exemplary embodiment of the present disclosure;
FIG. 3 illustrates a schematic diagram of a single phase leg of the converter shown in FIG. 2 in accordance with an exemplary embodiment of the present disclosure;
FIG. 4 illustrates waveforms of switching signals supplied to the eight switch units in the first phase leg shown in FIG. 3 and corresponding voltage and current waveforms in accordance with an exemplary embodiment of the present disclosure;
FIG. 5 illustrates an output voltage waveform of the converter shown in FIG. 2 in accordance with an exemplary embodiment of the present disclosure;
FIG. 6 illustrates a schematic diagram of a first type switch unit used in the converter shown in FIG. 2 in accordance with an exemplary embodiment of the present disclosure;
FIG. 7 illustrates a schematic diagram of a first type switch unit used in the converter shown in FIG. 2 in accordance with another exemplary embodiment of the present disclosure;
FIG. 8 illustrates a schematic diagram of second type switch unit used in the converter shown in FIG. 2 in accordance with an exemplary embodiment of the present disclosure;
FIG. 9 illustrates a schematic diagram of a second type switch unit used in the converter shown in FIG. 2 in accordance with another exemplary embodiment of the present disclosure;
FIG. 10 illustrates a schematic diagram of one phase leg of a converter in accordance with an exemplary embodiment of the present disclosure;
FIG. 11 illustrates at least part of a drive unit in accordance with an exemplary embodiment of the present disclosure;
FIG. 12 illustrates a block diagram of at least part of a drive unit in accordance with another exemplary embodiment of the present disclosure;
FIG. 13 is a flowchart which outlines an implementation of a method for driving a converter in accordance with an exemplary embodiment of the present disclosure;
FIG. 14 illustrates a flowchart of a method for driving a converter in accordance with an exemplary embodiment of the present disclosure; and
FIG. 15 illustrates a power conversion method in accordance with an exemplary embodiment of the present disclosure.

### DETAILED DESCRIPTION

In an effort to provide a concise description of these embodiments, not all features of an actual implementation are described in the one or more specific embodiments. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Unless defined otherwise, technical and scientific terms used herein have the same meaning as is commonly understood by one of ordinary skill in the art to which this disclosure belongs. The terms "first," "second," and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean either any, several, or all of the listed items. The use of "including," "comprising," or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect. The terms "circuit," "circuitry," and "controller" may include either a single component or a plurality of components, which are either active and/or passive components and may be optionally connected or otherwise coupled together to provide the described function.

Embodiments disclosed herein generally relate to converters which may be configured to perform power conversion for converting one form of electric power (e.g., DC or AC electric power) to another form of electric power (DC or AC electric power) in a unidirectional or bidirectional manner. In particular, in some embodiments, the inventors of the present disclosure have worked together to propose a new converter topology or an improved nested NPP topology for use in converters. The technical advantages or benefits of utilizing such a new or improved nested NPP topology is that the converter can be operated to provide better output waveforms, thereby output voltage ripples can be significantly suppressed, the volume or weight of the filter can be reduced, as well as the power capability of the converter can be improved. As used herein, "nested NPP" refers to an arrangement that at least two converter modules having the same or different structures can be coupled or cascaded together in an inside-to-outside or outside-to-inside manner (also can be viewed as left-to-right or right-to-left) in connection with the use of flying capacitors, to achieve higher output levels. In one example, a five-level converter can be constructed by nesting one three-level converter module with another three-level converter module. In another example, a seven-level converter can be constructed by nesting a three-level converter module with a five-level converter module. Also, the seven-level converter can be constructed by nesting three three-level converter modules one by one. It is apparent that converters capable of providing higher output levels can be constructed by nesting more converter modules together.

In some embodiments, on basis of the proposed new or improved nested NPP topology, the converter module used for nesting can be arranged to have a plurality of switch units. For example, a three-level converter module can be constructed to have at least one switch unit in a first longitudinal arm, at least one switch unit in a second longitudinal arm, and at least two switch units in a transverse arm. In some embodiments, at least two of the plurality of switch units can be switched on and/or off both in a complementary pattern and a non-complementary pattern. As used herein, "complementary pattern" refers one switch unit is on and another switch unit is off and vice versa. As used herein, "non-complementary pattern" refers to two switch units are operated to have the same switching states, such as both on and both off.

In some embodiments, on basis of the proposed new or improved nested NPP topology, in one or more switching control cycles, redundant switching states of the switching signals supplied to the plurality of switch units can be selectively used to balance the voltages of flying capacitors arranged in the converter.

In some embodiments, on basis of the proposed new or improved nested NPP topology, during at least a part of one switching control cycle, at least one switching signal supplied to the plurality of switch units can be blocked or masked to reduce switching numbers of the switch units, so as to reduce power loss.

In some embodiments, on basis of the proposed new or improved nested NPP topology, at least some of the switch units arranged in the converter module can be configured to have a structure formed by multiple series-connected switch devices. In some embodiments, the multiple series-connected switch devices can utilize low voltage rating switch devices, and the specific number of the switch devices can be determined based at least in part on associated operating parameters of the converter, such as DC-link voltages and nominal voltages of the switch devices.

Still in some embodiments, to ensure synchronous switching of the multiple series-connected switch devices, multiple driving circuits are provided to supply switching signals for the multiple switch devices. Further, in some embodiments, each switch device is arranged with a snubber circuit to ensure that the multiple switch devices can share substantially the same voltage during the process that the switch devices are switched on and/or off.

It is apparent to those skilled in the art that the new or improved nested NPP topology as proposed herein can be specifically implemented as an AC-DC converter (also can be referred to as rectifier) for converting single-phase, three-phase, or multiple-phase alternating-current voltage into DC voltage. Furthermore, the new or improved nested NPP topology as proposed herein can be specifically implemented as a DC-AC converter (also can be referred to as inverter) for converting DC voltage into single-phase, three-phase, or multiple-phase alternating-current voltage, such that one or more particular load such as three-phase AC electric motor can be driven to work.

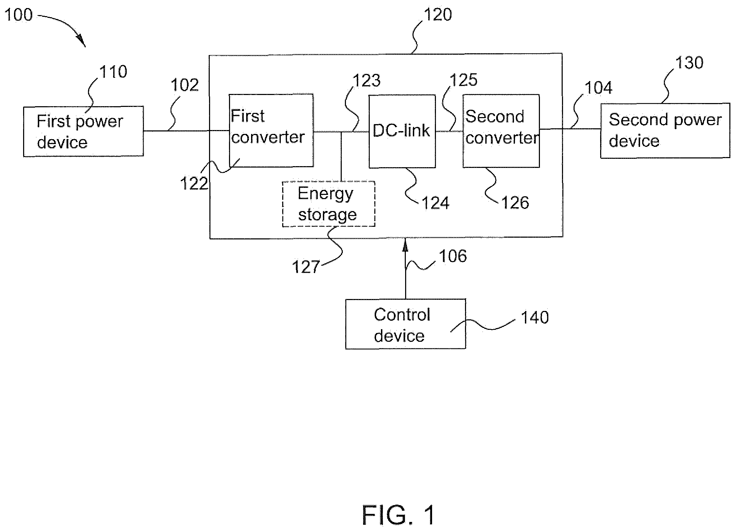

FIG. 1 illustrates a block diagram of a system 100 in accordance with an exemplary embodiment of the present disclosure. The system 100 may be any appropriate converter-based system that is capable of being configured to implement the new or improved nested NPP topology as disclosed herein. In some embodiments, the system 100 may be a multi-level converter-based system suitable for high power and high voltage applications. For example, the system 100 can be utilized in the following areas, including but not limited to, petro-chemistry, papermaking industry, mine, power plant, and water treatment plant, for driving one or more particular loads, such as pump, fan, and conveying device.

As illustrated in FIG. 1, the system 100 generally includes a power conversion device 120 and a control device 140 coupled in communication with the power conversion device 120. In one embodiment, the control device 140 is arranged to be in electrical communication with the power conversion device 120 and may transmit control signals 106 to the power conversion device 120 via one or more electrical links or wires for example. In another embodiment, the control device 140 may be in optical communication with the power conversion device 120 and can transmit the control signals 106 to the power conversion device 120 via an optical communication link, such as one or more optical fibers for example. The control device 140 may include any suitable programmable circuits or devices such as a digital signal processor (DSP), a field programmable gate array (FPGA), a programmable logic controller (PLC), and an application specific integrated circuit (ASIC). The power conversion device 120 can be operated to perform unidirectional or bidirectional power conversion between a first power device 110 and a second power device 130 in response to the control signals 106 transmitted from the control device 140.

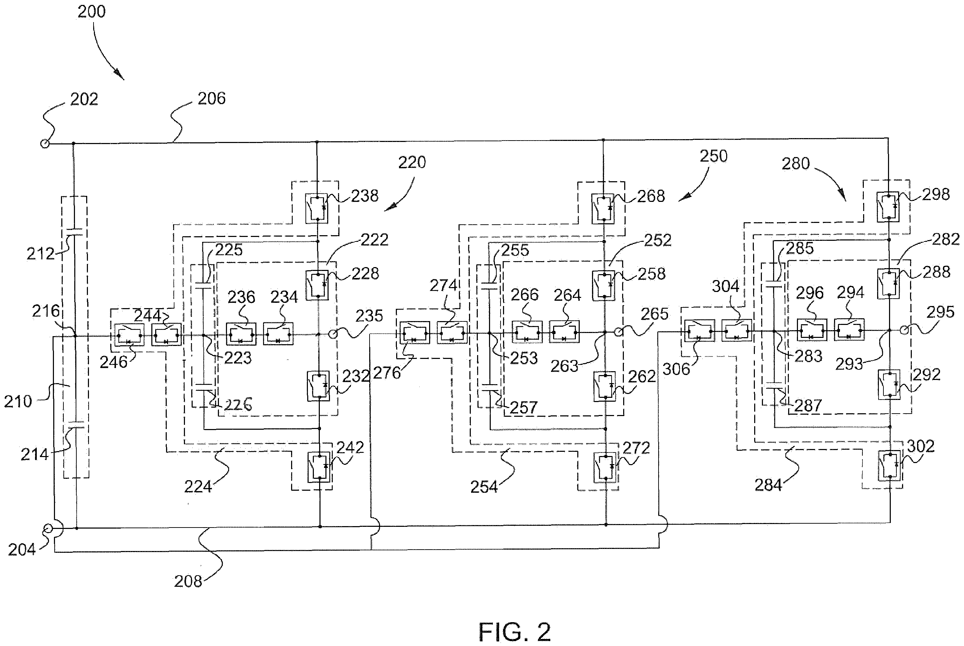

In one embodiment, as shown in FIG. 1, the power conversion device 120 may include a first converter 122, a DC link 124, and a second converter 126. In one embodiment, the first converter 122 may be an AC-DC converter which is configured to convert first electric power 102 (e.g., first AC electric power) provided from the first power device 110 (e.g., power grid) into DC electric power 123 (e.g., DC voltage). In some specific embodiments, the first converter 122 may be constructed to have a rectifier bridge structure formed by multiple diodes for converting AC electric power to DC electric power. Alternatively, the first converter 122 may employ the nested NPP topology which will be described in detail below with reference to FIG. 2. In one embodiment, the DC-link 124 may include multiple capacitors configured to filter first DC voltage 123 provided from the first converter 122, and supply second DC voltage 125 to the second converter 126. In one embodiment, the second converter 126 may be a DC-AC converter which is configured to convert the second DC voltage 125 into a second AC voltage 104, and supply the second AC voltage 104 to the second power device 130 (e.g., AC electric motor). In one embodiment, the second converter 126 may be constructed with controlled switch devices arranged to have the nested NPP topology which will be described in detail below with reference to FIG. 2. Although not illustrated in FIG. 1, in some embodiments, the system 100 may include one or more other devices and components. For example, one or more filters and/or circuit breakers can be placed between the first power device 110 and the power conversion device 120. Also, one or more filters and/or circuit breakers can be placed between the power conversion device 120 and the second power device 130.

In other embodiments, the system 100 constructed with the new or improved nested NPP topology disclosed herein can also be used in power generation systems, including but not limited to, wind power generation systems, solar/photovoltaic power generation systems, hydropower generation systems, and combinations thereof. In one embodiment, the first power device 110 may include one or more wind turbines which are configured to provide variable-frequency electric power. The first converter 122 may be an AC-DC converter and the second converter 126 may be a DC-AC converter, such that the variable-frequency electric power 102 can be converted into a fixed-frequency electrical power 104, for example, 50 Hertz or 60 Hertz AC power. The fixed-frequency electrical power 104 may be supplied to the second power device 130 such as a power grid for transmission and/or distribution. In some embodiments, the second power device 130 may include a load such as an electric motor used in a vehicle, a fan, or a pump, which can be driven by the second electric power 104. In some embodiments, when the system 100 is implemented as a solar power generation system, the first converter 122 may be a DC-DC converter for performing DC electric power conversion. In some occasions, the first converter 122 can be omitted, such that the second converter or DC-AC converter 126 is responsible for converting DC electric power provided from the first power device 110 (e.g., one or more solar panels) into AC electric power.

In some other embodiments, the system 100 may also be used in areas that are desirable to use uninterruptible/uninterrupted power system (UPS) for maintaining continuous power supply. In such applications, the power conversion device 120 of the system 100 may also be configured to have the new or improved nested NPP topology. In one embodiment, the first converter 122 may be an AC-DC converter which is configured to convert first AC electric power provided from the first power device 110 (e.g., power grid) into DC electric power. The system 100 may also include an energy storage device 127 which is configured to receive and store the DC electric power provided from the first converter 122. In one embodiment, the second converter 126 may be a DC-AC converter which is configured to convert the DC electric power provided from the first converter 122 or DC electric power obtained from the energy storage device 127 into second AC electric power, and supply the second electric power to the second power device 130 (e.g., a load).

Turning now to FIG. 2, which illustrates a detailed topology diagram of a converter 200 in accordance with an exemplary embodiment of the present disclosure. In one embodiment, the converter 200 can be used as the second converter 126, or more particularly, a DC-AC converter. In one embodiment, the converter 200 includes a first port 202 and a second port 204, both of which are configured to receive DC voltage such as the DC voltage 123 (see FIG. 1) provided from the first converter 122. The first port 202 is electrically coupled a first DC line 206, and the second port 204 is electrically coupled to a second DC line 208. A DC-link 210 is also electrically coupled between the first port 202 and the second port 204 for performing filtering operations with respect to the received DC voltage and maintaining substantially constant voltage for subsequent switch devices coupled thereto. In one embodiment, the DC-link 210 includes a first capacitor 212 and a second capacitor 214 coupled in series between the first DC line 206 and the second DC line 208. A DC middle point 216 is defined between the first capacitor 212 and the second capacitor 214. In other embodiments, the DC-link 210 may include more than two capacitors, and at least part of the capacitors can be coupled in series or in parallel.

With continuing reference to FIG. 2, the converter 200 comprises a first phase leg 220, a second phase leg 250, and a third phase leg 280. Each of the three phase legs 220, 250, 280 is electrically coupled between the first DC line 206 and the second DC line 208 for receiving DC voltage provided from the DC link 210 and providing output voltage at its corresponding output port. More specifically, in one embodiment, the first phase leg 220 provides a first phase AC voltage through first output port 235, the second phase leg 250 provides a second phase AC voltage through second output port 265, and the third phase leg 280 provides a third phase AC voltage through third output port 295. The first phase AC voltage, the second phase AC voltage, and the third phase AC voltage are offset from one another by 120 degrees. It should be understood that, when the converter 200 is implemented as an AC-DC converter, the three output ports 235, 265, 295 can be configured to receive input AC voltages. Thus, the three output ports 235, 265, 295 can be generally referred to as AC ports. Similarly, the first port 202 and the second port 204 can also be configured to output DC voltage, in which case the two ports 202, 204 can be generally referred to as DC ports.

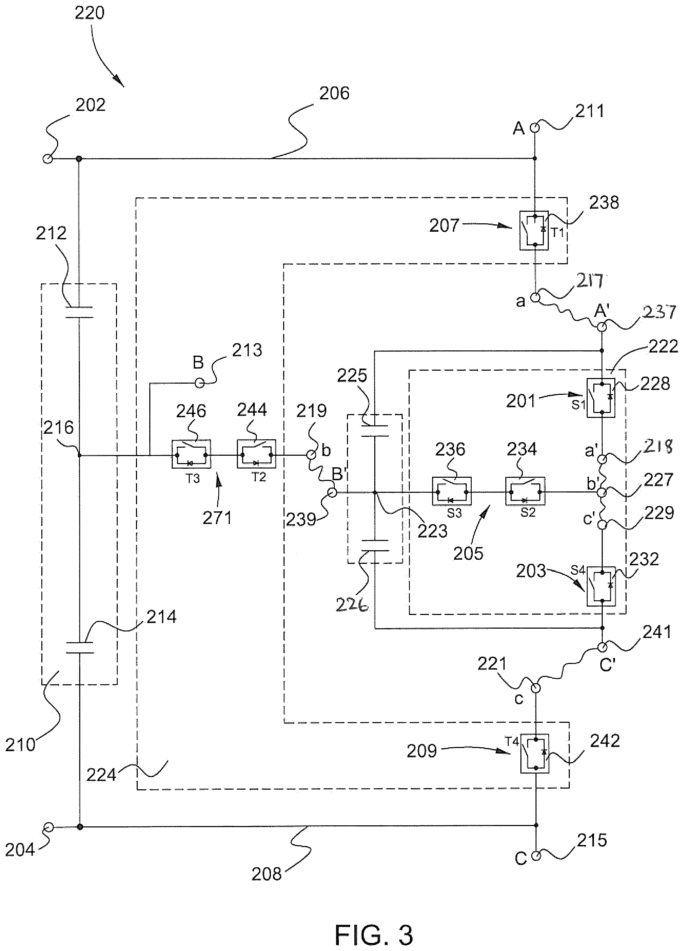

Please referring to FIG. 2 and FIG. 3 together, in one embodiment, the first phase leg 220 includes at least two converter modules that are constructed to have the same structure. The two converter modules are coupled together in a nested manner to achieve a higher level phase leg. More specifically, the first phase leg 220 includes a first converter module 222 and a second converter module 224 coupled together in a nested manner. In one embodiment, the first converter module 222 can be configured to provide an output voltage having 2n₁+1 levels, and the second converter module 224 can be configured to provide an output voltage having 2n₂+1 levels, where n₁ and n₂ are both equal to or larger than one, and n₁ is equal to n₂. In another embodiment, n₁ can be arranged to be different than n₂. In the illustrated embodiment, the first converter module 222 and the second converter module 224 are arranged to provide five-level output voltages. In particular, each of the first and second converter modules 222, 224 is configured to have six connecting terminals for the purpose of connecting with corresponding connecting terminals of other converter modules.

More specifically, in one embodiment, the first converter module 222 includes a first longitudinal arm 201, a second longitudinal arm 203, and a transverse arm 205. It should be noted that "longitudinal" and "transverse" used herein are used for reference only, and not intended to limit the scope of the invention to specific orientations. The first longitudinal arm 201 includes a first switch unit 228 which has one end formed as first-longitudinal-arm first connecting terminal 237 (or A') and another end formed as first-longitudinal-arm second connecting terminal 218 (or a'). The second longitudinal arm 203 includes a second switch unit 232 arranged in the same direction as the first switch unit 228. The second switch unit 232 has one end formed as second-longitudinal-arm first connecting terminal 241 (or C') and another end formed as second-longitudinal-arm second connecting terminal 229 (or c'). The transverse arm 205 includes a third switch unit 234 and a fourth switch unit 236 that are reversely coupled in series. The third switch unit 234 has one end formed as transverse-arm first connecting terminal 227 (or b'), and the fourth switch unit 236 has one end formed as transverse-arm second connecting terminal 239 (or B'). In one embodiment, the transverse-arm second connecting terminal 239 (B') is electrically connected to a flying-capacitor middle point 223 defined between a first flying capacitor 225 and a second flying capacitor 226. In addition, two ends of the first flying capacitor 225 are electrically connected to the two connecting terminals 237, 239 (A', B') respectively, and two ends of the second flying capacitor 226 are electrically connected to the two connecting terminals 241, 239 (C', B') respectively.

Similarly, the second converter module 224 includes a first longitudinal arm 207, a second longitudinal arm 209, and a transverse arm 271. The first longitudinal arm 207 includes a fifth switch unit 238 which has one end formed as first-longitudinal-arm first connecting terminal 217 (or a) and another end formed as first-longitudinal-arm second connecting terminal 211 (or A). The second longitudinal arm 209 includes a sixth switch unit 242 arranged in the same direction as the fifth switch unit 238. The sixth switch unit 242 has one end formed as second-longitudinal-arm first connecting terminal 221 (or c) and another end formed as second-longitudinal-arm second connecting terminal 215 (or C). The transverse arm 271 includes a seventh switch unit 244 and an eighth switch unit 246 that are reversely coupled in series. The seventh switch unit 244 has one end formed as transverse-arm first connecting terminal 219 (or b), and the eighth switch unit 246 has one end formed as transverse-arm second connecting terminal 213 (or B). In one embodiment, the transverse-arm second connecting terminal 213 (B) is electrically connected to a DC-link middle point 216 defined between the first capacitor 212 and the second capacitor 214 of the DC-link 210. In addition, two ends of the first capacitor 212 are electrically connected to the two connecting terminals 211, 213 (A, B) respectively, and two ends of the second capacitor 214 are electrically connected to the two connecting terminals 213, 215 (B, C) respectively.

In the illustrated embodiment, it can be seen that a nested NPP structure is formed by electrically connecting the two connecting terminals 217, 237 (a, A'), electrically connecting the two connecting terminals 219, 239 (b, B'), and electrically connecting the two connecting terminals 221, 241 (c, C'). It can be understood that, in other embodiments, similar connection can be made to form higher level converter by connecting three or more than three six-terminal converter modules. In the illustrated embodiment, since the first converter 222 is arranged as an inner-most block, the three connecting terminals 218, 227, 229 (a', b', c') of the first converter 222 are commonly connected with the AC port 235 for receiving or providing AC voltage. In addition, since the second converter 224 is arranged as an outer-most block, the first-longitudinal-arm second connecting terminal 211 (A) is electrically connected to the first DC port 202 through the first DC line 206, and the second-longitudinal-arm second connecting terminal 215 (C) is electrically connected to the second DC port 204 through the second DC line 208, so as to receive or provide DC voltage.

With continuing reference to FIG. 2, the second phase leg 250 is configured with similar structure as the first phase leg 220. For example, the second phase leg 250 also includes a first converter module 252 and a second converter module 254 that are coupled together in a nested manner. Each of the first and second converter modules 252, 254 has six connection terminals for connecting to corresponding terminals of other converter module. The first converter module 252 includes four switch units 258, 262, 264, 266, and the second converter module 254 includes four switch units 268, 272, 274, 276. The four switch units 258, 262, 264, 266 are connected in series to form a longitudinal arm, and another four switch units 268, 272, 274, 276 are connected in series to form a transverse arm. Two ends of the longitudinal arm are electrically connected to the first DC line 206 and the second DC line 208 respectively. One end of the transverse arm is electrically connected to the DC middle point 216, and the other end of the transverse arm is electrically connected to a joint connection 263 defined between the two switch units 258, 262. In addition, the second phase leg 250 includes two flying capacitors 255, 257 connected in series to form a flying capacitor arm. The two flying capacitors 255, 257 define a flying-capacitor middle point 253 which is electrically connected to a joint connection defined between the two switch units 266, 274. Another end of the first flying capacitor 255 is connected to a joint connection defined between the two switch units 268, 258, and another end of the second flying capacitor 257 is electrically connected to a joint connection defined between the two switch units 262, 272.

With continuing reference to FIG. 2, the third phase leg 280 is configured with similar structure as the first phase leg 220. For example, the third phase leg 280 also includes a first converter module 282 and a second converter module 284 that are coupled together in a nested manner. Each of the first and second converter modules 282, 284 has six connection terminals for connecting to corresponding terminals of other converter module. The first converter module 282 includes four switch units 288, 292, 294, 296, and the second converter module 284 includes four switch units 298, 302, 304, 306. The four switch units 288, 298, 292, 302 are connected in series to form a longitudinal arm, and another four switch units 294, 296, 304, 306 are connected in series to form a transverse arm. Two ends of the longitudinal arm are electrically connected to the first DC line 206 and the second DC line 208 respectively. One end of the transverse arm is electrically connected to the DC middle point 216, and the other end of the transverse arm is electrically connected to a joint connection 293 defined between the two switch units 288, 292. In addition, the third phase leg 280 includes two flying capacitors 285, 287 connected in series to form a flying capacitor arm. The two flying capacitors 285, 287 define a flying-capacitor middle point 283 which is electrically connected to a joint connection defined between the two switch units 296, 304. Another end of the first flying capacitor 285 is connected to a joint connection defined between the two switch units 298, 288, and another end of the second flying capacitor 287 is electrically connected to a joint connection defined between the two switch units 292, 302.

In one embodiment, each of the first phase leg 220, the second phase leg 250, and the third phase leg 280 is configured to provide output voltage of five levels. In particular, the switching states of the switch units in the first leg 220 are shown below in table 1.

**Table-1 Switching states of the first phase leg**

| Output voltage level | Switching states | | | | | | | |
|---|---|---|---|---|---|---|---|---|
| | First switch unit 228 | Second switch unit 232 | Third switch unit 234 | Fourth switch unit 236 | Fifth switch unit 238 | Sixth switch unit 242 | Seventh switch unit 244 | Eighth switch unit 246 |
| 2 | 1 | 0 | 0 | 1 | 1 | 0 | 0 | 1 |
| 1 | 1 | 0 | 0 | 1 | 0 | 0 | 1 | 1 |
| | 0 | 0 | 1 | 1 | 1 | 0 | 0 | 1 |
| 0 | 0 | 0 | 1 | 1 | 0 | 0 | 1 | 1 |
| | 1 | 0 | 0 | 1 | 0 | 1 | 1 | 0 |
| | 0 | 1 | 1 | 0 | 1 | 0 | 0 | 1 |
| -1 | 0 | 0 | 1 | 1 | 0 | 1 | 1 | 0 |
| | 0 | 1 | 1 | 0 | 0 | 0 | 1 | 1 |
| -2 | 0 | 1 | 1 | 0 | 0 | 1 | 1 | 0 |

It can be seen from Table-1, the first phase leg 220 can be controlled to provide output voltage having five different levels of "2," "1," "0," "-1," "1" by selectively controlling the switching states of the eight switch units in the first phase leg 220. It also can be seen when the output voltage level is "2" or "-2," there exists a sole combination switching states for the eight switch units. In contrast, when the output voltage level is "1" and "-1," there exist two combination switching states for the eight switch units. When the output voltage level is "0," there exist three combination switching states for the eight switch units. In some embodiments, the voltage of the first and second flying capacitors 225, 226 can be balanced by selectively using the switching states of the switch units. Furthermore, as shown in Table-1, the switch units of the first phase leg 220 are switched on and/or off in a complementary pattern. For example, the switching states of first switch unit 228 and the second switch unit 234 are switched in opposite states. Likewise, each of the switch unit pairs 232, 234; 238, 244; and 242, 246 are switched in opposite states.

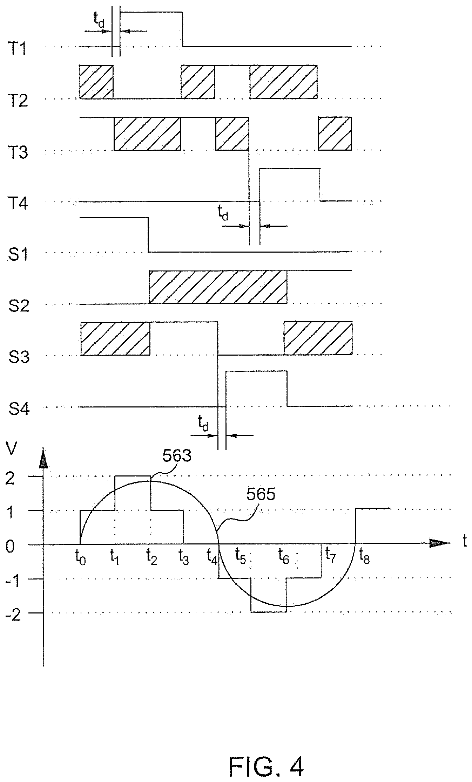

FIG. 4 illustrates waveforms of switching signals supplied to the eight switch units in the first phase leg 220 and corresponding voltage and current waveforms in accordance with an exemplary embodiment of the present disclosure. As shown in FIG. 4, the switch units of the first phase leg 220 can be further configured to be switched on and/or off in a non-complementary pattern. For example, when the output voltage level is transitioning from "1" to "2," the switching signal for the seventh switch unit 244 (T2) becomes logic "0," while the switching signal for the fifth switch unit 238 (T1) becomes logic "1" after a short time delay t_{d} (also known as dead-zone time). It is known that it usually takes longer time to turn off a switch device than turn on a switch device. Thus, the purpose of introducing such a short time delay is to avoid a short-circuit condition of the two flying capacitors when both switch units are in the ON state. In other words, during such a time delay t_{d}, both the seventh switch unit 244 (T2) and the fifth switch unit 238 (T1) are turned off, that is, the two switch units 244, 238 are controlled to operate in a non-complementary pattern. After the time delay t_{d}, the seventh switch unit 244 (T2) remains off and the fifth switch unit 238 (T1) is turned on, in this case, the two switch units 244, 238 are controlled to operate in a complementary pattern.

With continuing reference to FIG. 4, in case the output voltage 563 has a level of "1," the switching signal supplied to the fifth switch unit 238 (T1) is low level signal. Conventionally, to ensure complementary switching, the switching signal supplied to the seventh switch unit 244 (T2) should be a high level signal. In the illustrated embodiment, because electrical current can be flowing through the anti-parallel diode in association with the seventh switch unit 244 (T2), thus, the switching signal supplied to the seventh switch unit 244 (T2) can be temporarily blocked or masked to reduce switching numbers as well as reduce power loss due to the unnecessary switching actions. In this case, the fifth switch unit 238 and the seventh switch unit 244 are also operated in a non-complementary pattern. Similarly, as shown in FIG. 4, the fourth switch unit 234 (S3) and the second switch unit 232 (S4) can also be operated in complementary pattern and non-complementary pattern due to the introduction of delay time t_{d}. Furthermore, as shown in FIG. 4, in one embodiment, during the single switching control cycle starting from to to ts, the switching signals supplied to the switch units T2, T3, S2, S3 in the transverse arm are blocked in predetermined time period, so as to reduce switching numbers as well as power loss. In other embodiment, switching signals supplied to switch units T1, T4, S1, S4 in the longitudinal arm can be blocked to reduce switching numbers as well as power loss.

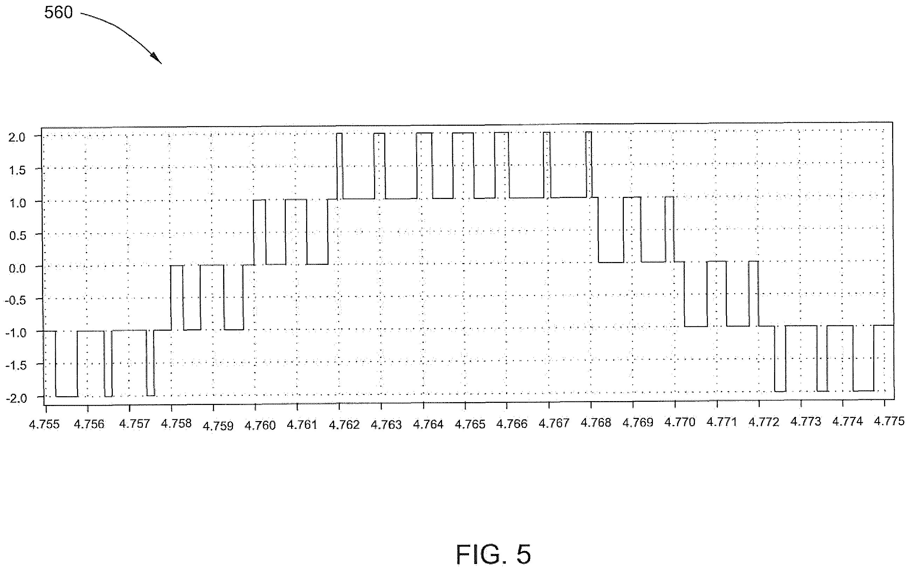

FIG. 5 illustrates an output voltage waveform 560 of the converter shown in FIG. 2 in accordance with an exemplary embodiment of the present disclosure. As shown in FIG. 5, with the use of converter having a nested NPP topology, one phase leg of the converter can provide output voltage having five levels with good waveforms.

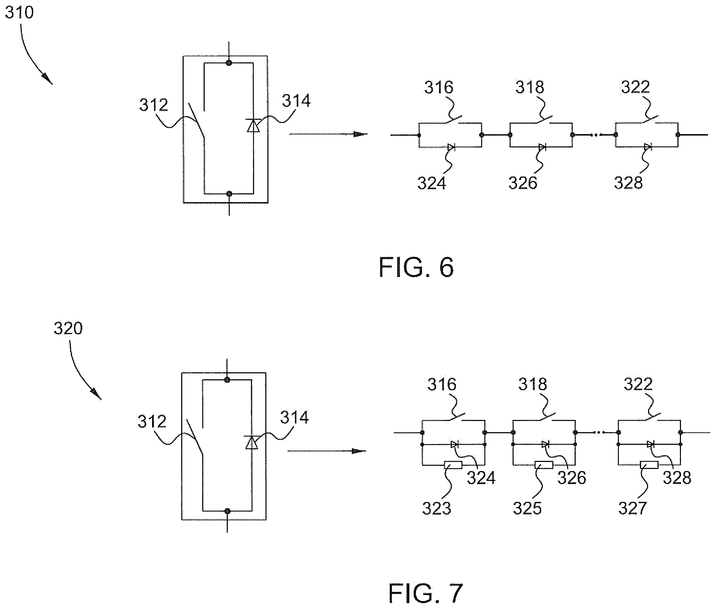

FIG. 6 illustrates a schematic diagram of a first type switch unit 310 contained in the converter as shown in FIG. 2 in accordance with an exemplary embodiment of the present disclosure. In one embodiment, the first type switch unit 310 can be any one of the switch units in the longitudinal arm of the three phase legs. In a particular embodiment, the first four switch units 238, 228, 232, 242 in the longitudinal arm of the first phase leg 220 can be configured to be exactly the same as the switch unit 310. More specifically, in one embodiment, the switch unit 310 includes a first switch device 316, a second switch device 318, and an n^{th} switch device 322, where n is equal to or larger than two. In addition, in one embodiment, the first switch device 316 is connected in parallel with a first anti-parallel diode 324, the second switch device 318 is connected in parallel with a second anti-parallel diode 326, and the n^{th} switch device 322 is connected in parallel with an n^{th} anti-parallel diode 328. In some conditions, each switch device can be integrated with the anti-parallel diode to form a single device. Because the first switch device 316, the second switch device 318, and the n^{th} switch device 322 are connected in series between the DC lines 206, 208, each of the switch devices is applied with a portion of the DC voltage. Thus, low nominal voltage switch device can be used to replace a single switch device 312 (as shown in FIG. 6, the single switch device 312 is also integrated with an anti-parallel diode 314) which has a high nominal voltage. Non-limiting examples of the switch device that may be used in the converter may include metal oxide semiconductor field effect transistor (MOSFET), insulated gate bipolar transistor (IGBT), and integrated gate commutated thyristor (IGCT).

FIG. 7 illustrates a schematic diagram of a first type switch unit 320 in accordance with another exemplary embodiment of the present disclosure. The first type switch unit 320 shown in FIG. 7 is substantially similar to the first type switch unit 310 shown in FIG. 6. For example, the first type switch unit 320 also includes a first switch device 316, a second switch device 318, and an n^{th} switch device 322, where n is equal to or larger than two. The first type switch unit 320 also includes a first anti-parallel diode 324, a second anti-parallel diode 326, and an n^{th} anti-parallel diode 328, each of which is coupled in parallel with a corresponding switch device. In addition, the first type switch unit 320 further includes a first snubber circuit 323 arranged in association with the first switch device 316, a second snubber circuit 325 arranged in association with the second switch device 318, and a third snubber circuit 327 arranged in association with the third switch device 322. In a particular embodiment, the first, second, and third snubber circuits 323, 325, 327 can be formed by one or more passive electronic devices such as capacitors, resistors, and so on. The purpose of providing these snubber circuits 323, 325, 327 is to ensure voltage to be shared equally among the switch devices 316, 318, 322 during the dynamic switching processes.

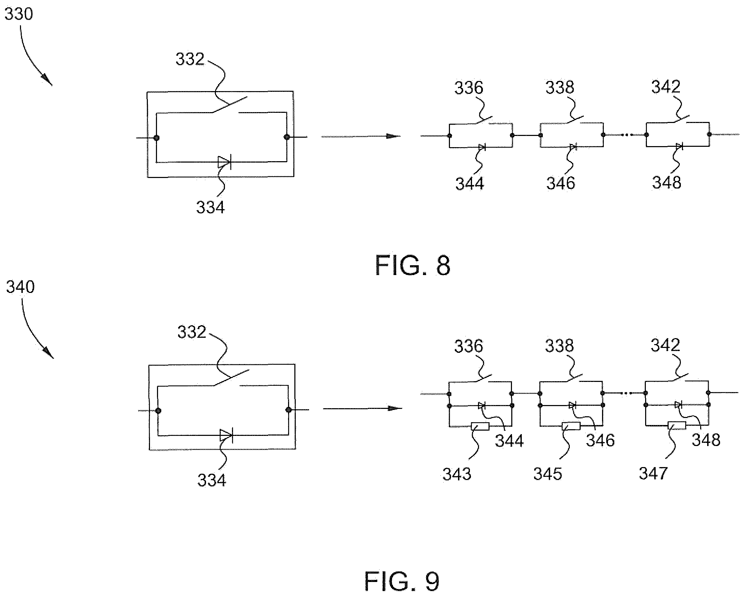

FIG. 8 illustrates a schematic diagram of a second type switch unit 330 used in the converter shown in FIG. 2 in accordance with an exemplary embodiment of the present disclosure. In one embodiment, the second type switch unit 330 can be any one of the switch unit in the transverse arm of the three phase legs. In a particular embodiment, the first four switch units 234, 236, 244, 246 in the transverse arm of the first phase leg 220 can be configured to be exactly the same as the switch unit 320. More specifically, in one embodiment, the switch unit 320 includes a first switch device 336, a second switch device 338, and an m^{th} switch device 342, where m is equal to or larger than two. In addition, in one embodiment, the first switch device 336 is connected in parallel with a first anti-parallel diode 344, the second switch device 338 is connected in parallel with a second anti-parallel diode 346, and the m^{th} switch device 342 is connected in parallel with an m^{th} anti-parallel diode 348. In some conditions, each switch device can be integrated with the anti-parallel diode to form a single device. Because the first switch device 316, the second switch device 318, and the m^{th} switch device 342 are connected in series between the DC lines 206, 208, each of the switch devices is applied with a portion of the DC voltage. Thus, low nominal voltage switch device can be used to replace a single switch device 332 (as shown in FIG. 8, the single switch device 332 is also integrated with an anti-parallel diode 334) which has a high nominal voltage. Non-limiting examples of the switch device that may be used in the converter may include metal oxide semiconductor field effect transistor (MOSFET), insulated gate bipolar transistor (IGBT), and integrated gate commutated thyristor (IGCT).

In some embodiments, the switch devices 336, 338, 342 in the second type switch unit 330 can be arranged to be the same as the switch devices 316, 318, 322. In other embodiments, different switch devices having different voltage ratings can be used. In addition, in some embodiments, the number of the switch devices arranged in the first type switch unit 310 can be the same as or different from the number of switch devices arranged in the second type switch unit 330. In some embodiments, the exact number of the switch devices used in the first or second switch units 310, 330 can be determined based on associated operating parameters of the converter, such as DC-link voltages and nominal voltages of the switch devices.

FIG. 9 illustrates a schematic diagram of a second type switch unit 340 in accordance with another exemplary embodiment of the present disclosure. The second type switch unit 340 shown in FIG. 9 is substantially similar to the second type switch unit 330 shown in FIG. 8. For example, the second type switch unit 340 also includes a first switch device 336, a second switch device 338, and an m^{th} switch device 342, where m is equal to or larger than two. The second type switch unit 340 also includes a first anti-parallel diode 344, a second anti-parallel diode 346, and an m^{th} anti-parallel diode 348, each of which is coupled in parallel with a corresponding switch device. In addition, the second type switch unit 340 further includes a first snubber circuit 343 arranged in association with the first switch device 336, a second snubber circuit 345 arranged in association with the second switch device 338, and a third snubber circuit 347 arranged in association with the third switch device 342. In a particular embodiment, the first, second, and third snubber circuits 343, 345, 347 can be formed by one or more passive electronic devices such as capacitors, resistors, and so on. The purpose of providing these snubber circuits 343, 345, 347 is to ensure voltage to be shared equally among the switch devices 336, 338, 342 during the dynamic switching process.

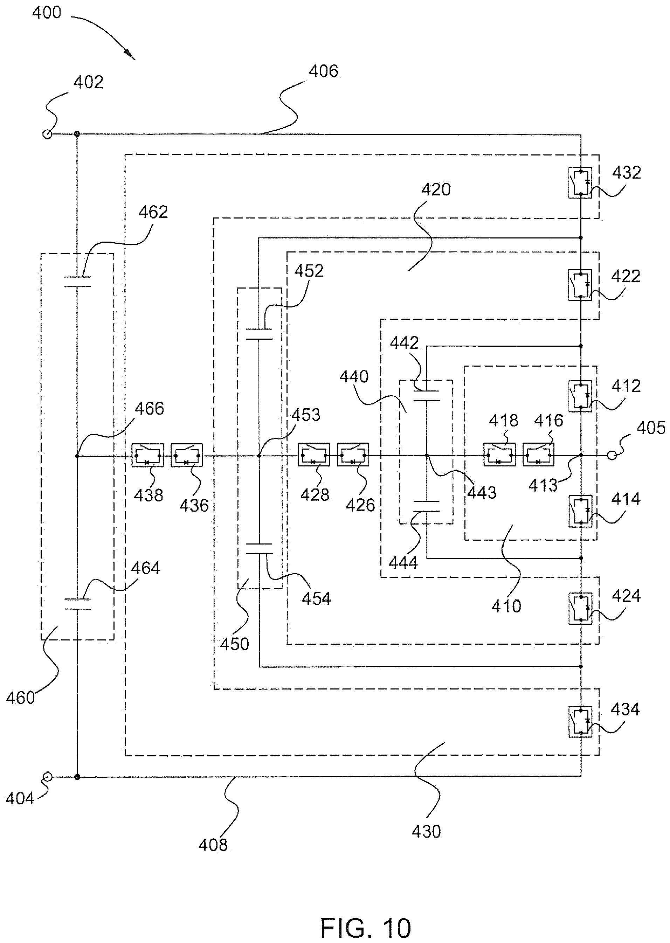

FIG. 10 illustrates a schematic diagram of one phase leg of a converter in accordance with another exemplary embodiment of the present disclosure. In particular, the single phase leg 400 shown in FIG. 10 can be used to replace one or more of the three phase legs 220, 250, 280 shown in FIG. 2. In the illustrated embodiment, the single phase leg 400 is configured to provide an output voltage having seven levels. As shown in FIG. 10, the single phase leg 400 includes a first port 402 and a second port 404 for receiving or providing DC voltages. The single phase leg 400 also includes a DC-link 460 for filtering the DC voltages and providing substantially constant voltage to the switch unit or switch devices connected to the DC-link 460. The single phase leg 400 also includes a third port 405 for providing or receiving AC voltages. In one embodiment, the DC-link 460 is electrically coupled between a first DC line 406 and a second DC line 408, and the first DC-link 406 includes a first capacitor 462 and a second capacitor 464 connected in series.

Referring to FIG. 10, the single phase leg 400 also includes a first converter module 410, a second converter module 420, and a third converter module 430 connected in a nested manner substantially similar to the single phase leg 220 shown in FIG. 3. In the illustrated embodiment, each of the three converter modules 410, 420, 430 is configured to provide three-level output voltage, such that the single phase leg 400 can provide seven-level output voltage. In other embodiments, the single phase leg can also be constructed by nesting a five-level converter module with a three-level converter module. Similar to the single phase leg 220 shown in FIG. 3, each of the three converter modules 410, 420, 430 is arranged to have six connecting terminals for connecting to corresponding connecting terminals of other converter modules. As shown in FIG. 10, the first converter module 410 includes four switch units 412, 414, 416, 418, the second converter module 420 includes four switch units 422, 424, 426, 428, and the third converter module 430 includes four switch units 432, 434, 436, 438. Of these switch units, six switch units 432, 422, 412, 414, 424, 434 are connected in series to form a longitudinal arm, another six switch units 438, 436, 428, 426, 418, 416 are connected in series to form a transverse arm. One end of the transverse arm is electrically connected to DC middle point 466 of the DC link 460, and the other end of the transverse arm is electrically connected to a joint connection 413 defined between the two switch units 412, 414. The single phase leg 400 also includes a first flying capacitor 442 and a second flying capacitor 444 connected in series to form a first flying capacitor arm 440. The single phase leg 400 also includes a third flying capacitor 452 and a fourth flying capacitor 454 connected in series to form a second flying capacitor arm 450. One end of the first flying capacitor 442 and one end of the second flying capacitor 444 are commonly connected to joint connection 443 defined between the two switch units 418, 426. The other end of the first flying capacitor 442 is connected to joint connection defined between the two switch units 422, 412, and the other end of the second flying capacitor 444 is connected to a joint connection defined between the two switch units 414, 424. One end of the third flying capacitor 452 and one end of the fourth flying capacitor 454 are commonly connected to joint connection 453 defined between the two switch units 436, 428. The other end of the third flying capacitor 452 is connected to joint connection defined between the two switch units 432, 422, and the other end of the fourth flying capacitor 454 is connected to a joint connection defined between the two switch units 424, 434.

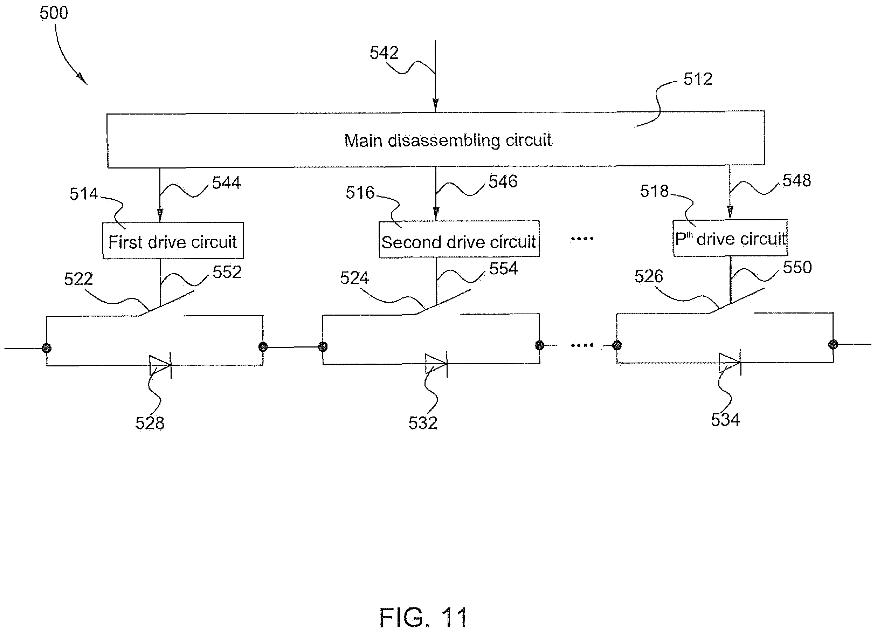

FIG. 11 illustrates at least a part of a drive unit 500 in accordance with an exemplary embodiment of the present disclosure. The drive unit 500 can be used to drive any one of the switch units shown in FIG. 2 and FIG. 10. As shown in FIG. 10, the drive unit 500 includes a main disassembling circuit 512, a first drive circuit 512, a second drive circuit 516, and a p^{th} drive circuit 518, where p is equal to or larger than two. In one embodiment, the number of the drive circuits is the same as the number of the switch devices that are series connected in the switch unit. In one embodiment, the main disassembling circuit 512 is arranged to be in optical communication (e.g., through one or more optical fibers) with the first drive circuit 514, the second drive circuit 516, and the n^{th} drive circuit 518. The main disassembling circuit 512 is configured to receive a main driving signal 542 and disassemble the main drive signal 542 into a first optical driving signal 544, a second optical driving signal 546, and a p^{th} optical driving signal 548, where p is equal to or larger than two. The main driving signal 542 may be generated from the control device 140 shown in FIG. 1 through the implementation of one or more modulation algorithms, including but not limited to, pulse width modulation algorithm, space vector pulse width modulation algorithm, as so on. The first drive circuit 514 is configured to convert the first optical driving signal 544 into a first electric driving signal 552, and supply the first electric driving signal 552 to the first switch device 522. The second drive circuit 516 is configured to convert the second optical driving signal 546 into a second electric driving signal 554, and supply the second electric driving signal 554 to the second switch device 524. The p^{th} drive circuit 518 is configured to convert the p^{th} optical driving signal 548 into p^{th} electric driving signal 550, and supply the p^{th} electric driving signal 550 to the p^{th} switch device 526. The first switch device 522 is connected in parallel with a first anti-parallel diode 528, the second switch device 524 is connected in parallel with a second anti-parallel diode 532, and the p^{th} switch device 526 is connected in parallel with a p^{th} anti-parallel diode 534. In some embodiments, the first electric driving signal 552, the second electric driving signal 554, and the p^{th} electric driving signal 550 are supplied in a manner to allow the first switch device 522, the second switch device 524, and the p^{th} switch device 526 can be turned on and/or off simultaneously.

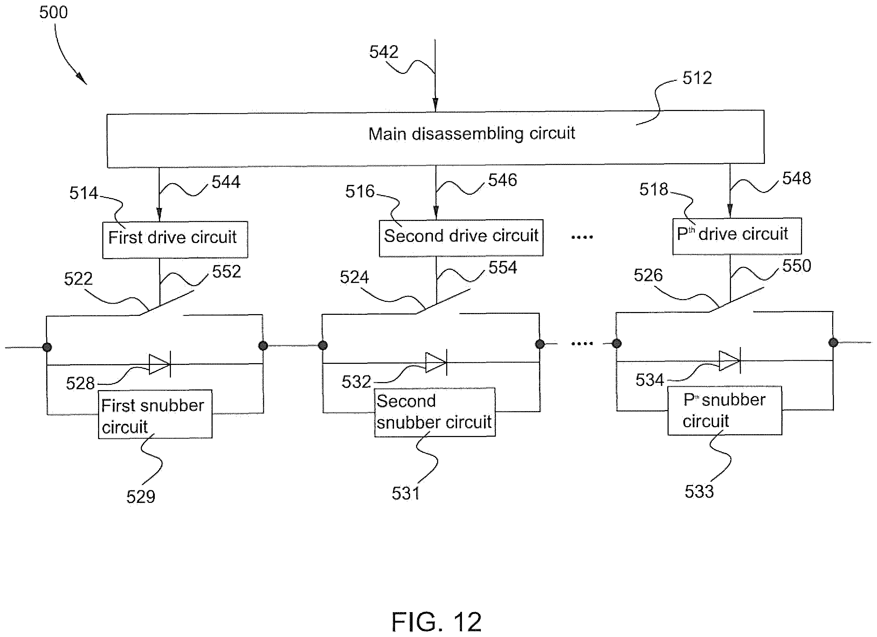

FIG. 12 illustrates a block diagram of at least part of a drive unit 500 in accordance with another exemplary embodiment of the present disclosure. The drive unit 500 shown in FIG. 12 is substantially similar to what has been shown and described with reference to FIG. 11. For example, the drive unit 500 shown in FIG. 12 also includes a main disassembling circuit 512, a first drive circuit 514, a second drive circuit 516, and a p^{th} drive circuit 518. In particular, in the illustrated embodiment, the first switch device 522 is arranged with a first snubber circuit 529, the second switch device 524 is arranged with a second snubber circuit 531, and the p^{th} switch device 526 is arranged with a p^{th} snubber circuit 533. In one embodiment, each of the three snubber circuits 529, 531, 533 are coupled in parallel with the three switch devices 522, 524, 526 respectively. In other embodiments, these snubber circuits 529, 531, 533 can be coupled in series or both in series and in parallel with the switch devices 522, 524, 526 respectively. The use of these snubber circuits 529, 531, 533 can ensure substantially synchronous switching actions of the switch devices 522, 524, 526, such that voltage applied to these switch devices 522, 524, 526 can be shared equally during the dynamic switching processes.

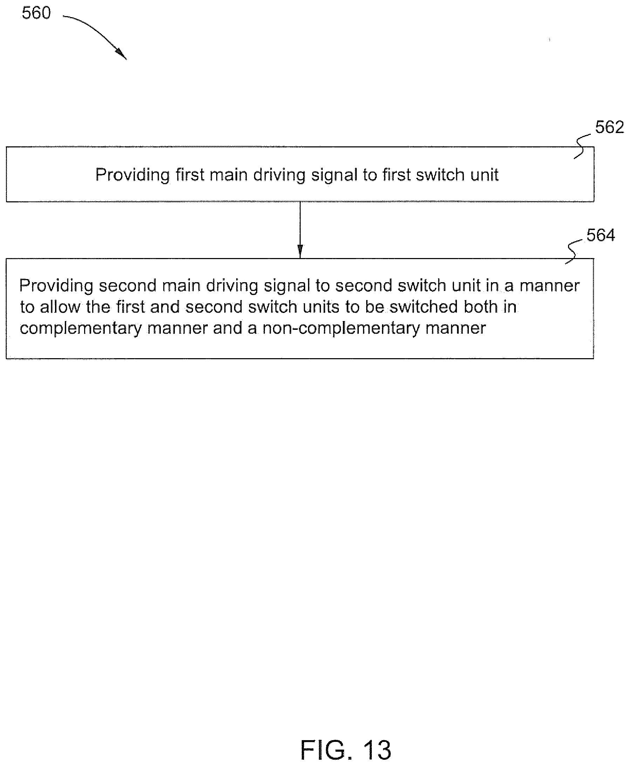

FIG. 13 is a flowchart which outlines an implementation of a method 560 for driving a converter, or more particularly, a converter configured to have a nested NPP topology as shown in FIG. 2. At least some of the blocks/actions illustrated in method 560 may be programmed with software instructions stored in a computer-readable storage medium. The computer-readable storage medium may include volatile and nonvolatile, removable and non-removable media implemented in any method or technology. The computer-readable storage medium includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory medium which can be used to store the desired information and which can be accessed by one or more processors.

In one embodiment, the method 560 may start to implement from block 562. At block 562, an action is performed to provide first main driving signal to a first switch unit, for example, the fifth switch unit 238 of the second converter module 224 of the first phase leg 220. As shown in FIG. 4, when the output voltage level is "2," the main driving signal supplied to the fifth switch unit 238 both include logic "0" and logic "1" signals due to the introduction of a time delay t_{d}.

In one embodiment, the method 560 may further include a block 564. At block 564, an action is performed to provide second main driving signal to a second switch unit, for example, the seventh switch unit 244 of the second converter module 244 of the first phase leg 220. As shown in FIG. 4, when the output voltage level is "2," the second main driving signal supplied to the seventh switch unit 244 is always a logic "0" signal. Thus, the fifth switch unit 238 and the seventh switch unit 244 can be controlled to operate both in a complementary pattern and a non-complementary pattern.

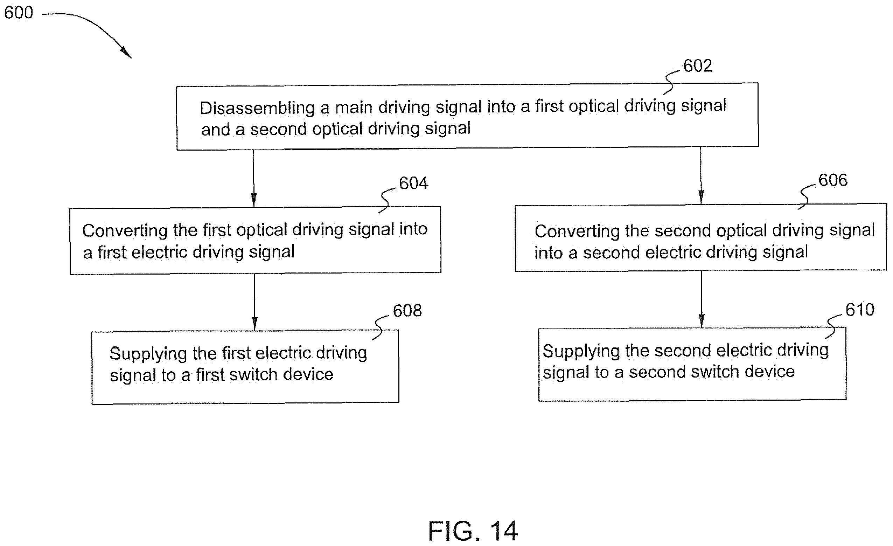

FIG. 14 illustrates a flowchart of a method 600 for driving a converter such as the converter shown in FIG. 2.

In one embodiment, the method 600 may start to implement from block 602. At block 602, a main driving signal is disassembled into at least a first optical driving signal and a second optical driving signal. The action performed at block 602 may be accomplished by the main disassembling circuit 512 shown in FIG. 11 or FIG. 12.

In one embodiment, the method 600 may further include a block 604. At block 604, the first optical driving signal is converted into a first electric driving signal, which is responsible by the first drive circuit 514 shown in FIG. 11 or FIG. 12.

In one embodiment, the method 600 may further include a block 606. At block 606, the second optical driving signal is converted into a second electric driving signal, which is responsible by the second drive circuit 516 shown in FIG. 11 or FIG. 12.

In one embodiment, the method 600 may further include a block 608. At block 608, the first electric driving signal is supplied to a first switch device in the switch unit.

In one embodiment, the method 600 may further include a block 610. At block 610, the second electric driving signal is supplied to a second switch device in the switch unit. In some embodiments, the first electric driving signal and the second electric driving signal are supplied in a manner to allow the first and second switch devices are turned on and/or off substantially synchronously. Still in some embodiments, snubber circuits may be arranged in association with the switch devices to ensure voltage can be shared equally among the switch devices.

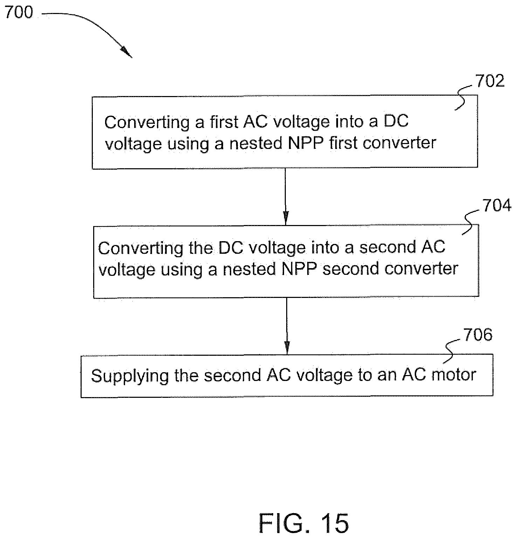

FIG. 15 illustrates a power conversion method 700 in accordance with an exemplary embodiment of the present disclosure. In some specific embodiments, the power conversion method 700 may be implemented with the use of a converter constructed with a new or improved nested NPP topology as shown in FIG. 2.

In one embodiment, the method 700 may start to implement from block 702. At block 702, a first converter (e.g., an AC-DC converter) is used to convert a first AC voltage provided from a power source such as a power grid into a DC voltage. In particular, the first converter is arranged to have the nested NPP topology to perform AC-DC power conversion. In some other embodiments, it is possible to use passive devices such as a rectifier formed to have diode bridge structure to convert the first AC voltage into DC voltage.

In one embodiment, the method 700 may further include a block 704. At block 704, a second converter (e.g., DC-AC converter or inverter) is used to convert the DC voltage into a second AC voltage. In some embodiments, the second converter is also designed to have the nested NPP topology for performing DC-AC power conversion.

In one embodiment, the method 700 may further include a block 706. At block 706, the second AC voltage is supplied to a load such as an AC motor. When the second AC voltage is a three-phase AC voltage, the AC motor can be a three-phase AC motor.

While the invention has been described with reference to exemplary embodiments, it will be understood by those skilled in the art that various changes may be made and equivalents may be substituted for elements thereof without departing from the scope of the invention. Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional assemblies and techniques in accordance with principles of this disclosure. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A converter (200), comprising:
a first converter module (222; 410); and
a second converter module (224; 420) coupled to the first converter module (222; 410) in a nested manner;
wherein each of the first converter module (222; 410) and the second converter module (224; 420) comprises a plurality of switch units (228, 232, 234, 236; 238, 242, 244, 246); and
wherein when the converter (200) is operated to perform power conversion, at least two of the plurality of switch units (228, 232, 234, 236; 238, 242, 244, 246) are configured to be switched both in a complementary pattern and a non-complementary pattern;
**characterized in that** when the converter (200) is operated to perform power conversion, at least one switching signal supplied to at least one of the plurality of switch units (228, 232, 234, 236; 238, 242, 244, 246) is blocked to reduce the switching numbers during at least part of a time period of a switching control cycle.

2. The converter (200) of claim 1, wherein the first converter module (222) and/or the second converter module comprise:
a transverse-arm first connecting terminal (239);
a transverse-arm second connecting terminal (227);
a first-longitudinal-arm first connecting terminal (218);
a first-longitudinal-arm second connecting terminal (237);
a second-longitudinal-arm first connecting terminal (229); and
a second-longitudinal-arm second connecting terminal (241);
wherein at least two switch units (234, 236) are reversely coupled between the transverse-arm first connecting terminal (239) and the transverse-arm second connecting terminal (227) in series;
wherein at least one first switch unit (228) is coupled between the first-longitudinal-arm first connecting terminal (218) and the first-longitudinal-arm second connecting terminal (237); and
wherein at least one second switch unit (232) is coupled between the second-longitudinal-arm first connecting terminal (229) and the second-longitudinal-arm second connecting terminal (241), and the at least one first switch unit (228) and the at least one second switch unit (232) are arranged in the same direction.

3. The converter (200) of claim 2, wherein the transverse-arm first connecting terminal (239) of one of the first and second converter modules (222) is electrically coupled to a corresponding connecting terminal (219) of the other one of the first and second converter modules (224) or is electrically coupled to a DC middle point; the transverse-arm second connecting terminal (227) of the one of the first and second converter modules (222) is electrically coupled to a corresponding connecting terminal of the other one of the first and second converter modules or is electrically coupled to AC port (235); two connecting terminals (237, 241) of the first-longitudinal-arm first and second connecting terminals, second-longitudinal-arm first and second connecting terminals of the one of the first and second converter modules (222) are electrically coupled to corresponding connecting terminals (217, 221) of the other one of the first and second converter modules or are electrically coupled to two DC electrical lines respectively; and the other two connecting terminals (218, 229) of the first-longitudinal-arm first and second connecting terminals, second-longitudinal-arm first and second connecting terminals of the one of the first and second converter modules (222) are electrically coupled to corresponding connecting terminals of the other one of the converter modules or are commonly electrically coupled to the AC port (235).

4. The converter (200) of any preceding claim, wherein the converter further comprises:
a flying capacitor arm, the flying capacitor arm comprising:
a first flying capacitor (225); and
a second flying capacitor (226) coupled in series with the first flying capacitor (225), and the first and second flying capacitors (225, 226) defining a flying-capacitor middle point (223) therebetween; and
wherein a first terminal of the flying capacitor arm is electrically coupled to a first-longitudinal-arm second connecting terminal (237) of the first converter module (222) and a first-longitudinal-arm first connecting terminal (217) of the second converter module (224); a second terminal of the flying capacitor arm is electrically coupled to a second-longitudinal-arm second connecting terminal (241) of the first converter module (222) and a second-longitudinal-arm first connecting terminal (221) of the second converter module (224); and the flying-capacitor middle point (223) is electrically coupled to a transverse-arm second connecting terminal (239) of the first converter module (222) and a transverse-arm first connecting terminal (219) of the second converter module (224).

5. The converter (200) of claim 4, wherein voltages of the first flying capacitor and the second flying capacitor (225, 226) are substantially balanced in one or more switching control cycles by selectively using redundant switching states of the switching signals supplied to the plurality of switch units (228, 232, 234, 236; 238, 242, 244, 246).

6. The converter (200) of any preceding claim, wherein the first converter module (222) has substantially the same structure as the second converter module (224), the first converter module (222) is configured to provide signals having 2n₁+1 levels, the second converter module (224) is configured to provide signals having 2n₂+1 levels, wherein n₁ and n₂ are equal to or larger than one, and n₁ is equal to n₂.

7. The converter of any of claims 1 to 5, wherein the first converter module has a different structure than the second converter module, the first converter module is configured to provide signals having 2n₁+1 levels, the second converter module is configured to provide signals having 2n₂+1 levels, wherein n₁ and n₂ are equal to or larger than one, and n₁ is not equal to n₂.

8. The converter (200) of any preceding claim, wherein the converter comprises:
at least one longitudinal arm comprising at least one first switch unit (310; 320), the at least one first switch unit (310; 320) comprising N switch devices (316, 318, 322) connected in series; and
at least one transverse arm comprising at least one second switch unit (330; 340), the at least one second switch unit (330; 340) comprising M switch devices (336, 338, 342) connected in series, wherein both N and M are larger than two, and N is not equal to M.

9. The converter (200) of any preceding claim, wherein at least one of the plurality of switch units comprises at least two switch devices (316, 318, 322) that are connected to each other in series.

10. The converter (200) of claim 9, wherein each of the at least two switch devices (316, 318, 322) is arranged with a respective snubber circuit (323, 325, 327), and the snubber circuit (323, 325, 327) is configured to ensure the at least two switch devices (316, 318, 322) substantially share the same voltage during the process that the switch devices (316, 318, 322) are switched on or off.

11. A method for driving a converter (200), the converter comprising at least a first converter module (222; 410) and a second converter module (224; 420) coupled together to form a nested neutral point piloted topology, the first or second converter module (222, 224; 410, 420) comprising at least a first switch unit and a second switch unit, the method comprising:
providing a first main driving signal for driving the first switch unit; and
providing a second main driving signal for driving the second switch unit to allow the first and second switch units to be switched both in a complementary pattern and a non-complementary pattern;
wherein the method is **characterized by** blocking at least one main driving signal supplied to at least one of the first and second switch units to reduce the switching numbers during at least part of a time period of a switching control cycle.

12. The method of claim 11, wherein the converter (200) comprises a first flying capacitor (225) and a second flying capacitor (226), and the method further comprises: selectively using redundant switching states of the main driving signals supplied to the first and second switch units (228, 232, 234, 236; 238, 242, 244, 246) to substantially balance voltages of the first flying capacitor (225) and the second flying capacitor (226) in one or more switching control cycles.

## Patentansprüche

1. Stromrichter (200), der aufweist:
ein erstes Stromrichtermodul (222; 410); und
ein zweites Stromrichtermodul (224; 420), das mit dem ersten Stromrichtermodul (222; 410) in verschachtelter Weise gekoppelt ist;
wobei jedes von dem ersten Stromrichtermodul (222; 410) und dem zweiten Stromrichtermodul (224; 420) mehrere Schalteinheiten (228, 232, 234, 236; 238, 242, 244, 246) aufweist; und
wobei, wenn der Stromrichter (200) betrieben wird, um eine Leistungsumwandlung durchzuführen, wenigstens zwei der mehreren Schalteinheiten (228, 232, 234, 236; 238, 242, 244, 246) konfiguriert sind, um sowohl in einem komplementären Muster als auch in einem nicht-komplementären Muster geschaltet zu werden;
**dadurch gekennzeichnet, dass**, wenn der Stromrichter (200) betrieben wird, um eine Leistungsumwandlung durchzuführen, wenigstens ein Schaltsignal, das zu wenigstens einer der mehreren Schalteinheiten (228, 232, 234, 236; 238, 242, 244, 246) geliefert wird, blockiert ist, um die Anzahl von Umschaltungen während wenigstens eines Teils der Zeitperiode eines Schaltsteuerzyklus zu reduzieren.

2. Stromrichter (200) nach Anspruch 1, wobei das erste Stromrichtermodul (222) und/oder das zweite Stromrichtermodul aufweisen:
einen ersten Verbindungsanschluss (239) eines Querarms;
einen zweiten Verbindungsanschluss (227) des Querarms;
einen ersten Verbindungsanschluss (218) eines ersten Längsarms;
einen zweiten Verbindungsanschluss (237) des ersten Längsarms;
einen ersten Verbindungsanschluss (229) eines zweiten Längsarms (229); und
einen zweiten Verbindungsanschluss (241) des zweiten Längsarms;
wobei wenigstens zwei Schalteinheiten (234, 236) zwischen dem ersten Verbindungsanschluss (239) des Querarms und dem zweiten Verbindungsanschluss (227) des Querarms in Reihe entgegengesetzt geschaltet sind;
wobei wenigstens eine erste Schalteinheit (228) zwischen dem ersten Verbindungsanschluss (218) des ersten Längsarms und dem zweiten Verbindungsanschluss (237) des ersten Längsarms geschaltet ist; und
wobei wenigstens eine zweite Schalteinheit (232) zwischen dem ersten Verbindungsanschluss (229) des zweiten Längsarms und dem zweiten Verbindungsanschluss (241) des zweiten Längsarms geschaltet ist und die wenigstens eine erste Schalteinheit (228) und die wenigstens eine zweite Schalteinheit (232) in die gleiche Richtung angeordnet sind.

3. Stromrichter (200) nach Anspruch 2, wobei der erste Verbindungsanschluss (239) des Querarms eines von dem ersten und zweiten Stromrichtermodul (222) mit einem entsprechenden Verbindungsanschluss (219) des anderen von dem ersten und zweiten Stromrichtermodul (224) elektrisch gekoppelt ist oder mit einem Gleichspannungsmittelpunkt elektrisch gekoppelt ist; der zweite Verbindungsanschluss (227) des Querarms des einen von dem ersten und zweiten Stromrichtermodul (222) mit einem entsprechenden Verbindungsanschluss des anderen von dem ersten und zweiten Stromrichtermodul elektrisch gekoppelt ist oder mit einem Wechselspannungsanschluss (235) elektrisch gekoppelt ist; zwei Verbindungsanschlüsse (237, 241) von dem ersten und zweiten Verbindungsanschluss des ersten Längsarms, dem ersten und zweiten Verbindungsanschluss des zweiten Längsarms des einen von dem ersten und zweiten Stromrichtermodul (222) mit entsprechenden Verbindungsanschlüssen (217, 221) des anderen von dem ersten und zweiten Stromrichtermodul elektrisch gekoppelt sind bzw. mit zwei elektrischen Gleichspannungsleitungen elektrisch gekoppelt sind; und die anderen beiden Verbindungsanschlüsse (218, 229) von dem ersten und zweiten Verbindungsanschluss des ersten Längsarms, dem ersten und zweiten Verbindungsanschluss des zweiten Längsarms des einen von dem ersten und zweiten Stromrichtermodul (222) mit entsprechenden Verbindungsanschlüssen des anderen der Stromrichtermodule elektrisch gekoppelt sind oder gemeinsam mit dem Wechselspannungsanschluss (235) elektrisch gekoppelt sind.

4. Stromrichter (200) nach einem beliebigen vorhergehenden Anspruch, wobei der Stromrichter ferner aufweist:
einen fliegenden Kondensatorarm, wobei der fliegende Kondensatorarm aufweist:
einen ersten fliegenden Kondensator (225); und
einen zweiten fliegenden Kondensator (226), der mit dem ersten fliegenden Kondensator (225) in Reihe geschaltet ist, und wobei der erste und der zweite fliegende Kondensator (225, 226) dazwischen einen fliegenden Kondensatormittelpunkt (223) definieren; und
wobei ein erster Anschluss des fliegenden Kondensatorarms mit einem zweiten Verbindungsanschluss (237) des ersten Längsarms des ersten Stromrichtermoduls (222) und einem ersten Verbindungsanschluss (217) des ersten Längsarms des zweiten Stromrichtermoduls (224) elektrisch gekoppelt ist; ein zweiter Anschluss des fliegenden Kondensatorarms mit einem zweiten Verbindungsanschluss (241) des zweiten Längsarms des ersten Stromrichtermoduls (222) und einem ersten Verbindungsanschluss (221) des zweiten Längsarms des zweiten Stromrichtermoduls (224) elektrisch gekoppelt ist; und der fliegende Kondensatormittelpunkt (223) mit einem zweiten Verbindungsanschluss (239) des Querarms des ersten Stromrichtermoduls (222) und einem ersten Verbindungsanschluss (219) des Querarms des zweiten Stromrichtermoduls (224) elektrisch gekoppelt ist.

5. Stromrichter (200) nach Anspruch 4, wobei Spannungen des ersten fliegenden Kondensators und des zweiten fliegenden Kondensators (225, 226) in einem oder mehreren Schaltsteuerzyklen durch selektives Verwenden redundanter Schaltzustände der Schaltsignale, die zu den mehreren Schalteinheiten (228, 232, 234, 236; 238, 242, 244, 246) geliefert werden, im Wesentlichen ausgeglichen sind.

6. Stromrichter (200) nach einem beliebigen vorhergehenden Anspruch, wobei das erste Stromrichtermodul (222) im Wesentlichen den gleichen Aufbau wie das zweite Stromrichtermodul (224) aufweist, wobei das erste Stromrichtermodul (222) konfiguriert ist, um Signale mit 2n₁+1 Pegeln bereitzustellen, das zweite Stromrichtermodul (224) konfiguriert ist, um Signale mit 2n₂+1 Pegeln bereitzustellen, wobei n₁ und n₂ gleich oder größer als eins sind und n₁ gleich n₂ ist.

7. Stromrichter nach einem beliebigen der Ansprüche 1 bis 6, wobei das erste Stromrichtermodul einen anderen Aufbau als das zweite Stromrichtermodul aufweist, wobei das erste Stromrichtermodul (222) konfiguriert ist, um Signale mit 2n₁+1 Pegeln bereitzustellen, das zweite Stromrichtermodul (224) konfiguriert ist, um Signale mit 2n₂+1 Pegeln bereitzustellen, wobei n₁ und n₂ gleich oder größer als eins sind und n1 ungleich n2 ist.

8. Stromrichter (200) nach einem beliebigen vorhergehenden Anspruch, wobei der Stromrichter aufweist:
wenigstens einen Längsarm, der wenigstens eine erste Schalteinheit (310; 320) aufweist, wobei die wenigstens eine erste Schalteinheit (310; 320) N Schaltvorrichtungen (316, 318, 322) aufweist, die in Reihe geschaltet sind; und
wenigstens einen Querarm, der wenigstens eine zweite Schalteinheit (330; 340) aufweist, wobei die wenigstens eine zweite Schalteinheit (330; 340) M Schaltvorrichtungen (336, 338, 342) aufweist, die in Reihe geschaltet sind, wobei sowohl N als auch M größer als zwei sind und N ungleich M ist.

9. Stromrichter (200) nach einem beliebigen vorhergehenden Anspruch, wobei wenigstens eine der mehreren Schalteinheiten wenigstens zwei Schaltvorrichtungen (316, 318, 322) aufweist, die in Reihe miteinander verbunden sind.

10. Stromrichter (200) nach Anspruch 9, wobei jede der wenigstens zwei Schaltvorrichtungen mit einer jeweiligen Snubber-Schaltung (323, 325, 327) eingerichtet ist und die Snubber-Schaltung (323, 325, 327) konfiguriert ist, um sicherzustellen, dass die wenigstens zwei Schaltvorrichtungen (316, 318, 322) während des Prozesses, in dem die Schaltvorrichtungen (316, 318, 322) ein- oder ausgeschaltet werden, im Wesentlichen die gleiche Spannung nutzen.

11. Verfahren zur Ansteuerung eines Stromrichters (200), wobei der Stromrichter wenigstens ein erstes Stromrichtermodul (222; 410) und ein zweites Stromrichtermodul (224; 420) aufweist, die miteinander gekoppelt sind, um eine verschachtelte Neutral-Point-Piloted-Topologie zu bilden, wobei das erste oder zweite Stromrichtermodul (222, 224; 410, 420) wenigstens eine erste Schalteinheit und eine zweite Schalteinheit aufweisen, wobei das Verfahren aufweist:
Bereitstellen eines ersten Hauptansteuersignals zur Ansteuerung der ersten Schalteinheit; und
Bereitstellen eines zweiten Hauptansteuersignals zur Ansteuerung der zweiten Schalteinheit, um der ersten und der zweiten Schalteinheit zu ermöglichen, sowohl in einem komplementären Muster als auch in einem nicht-komplementären Muster geschaltet zuwerden;
wobei das Verfahren durch Blockieren wenigstens eines Hauptansteuersignals gekennzeichnet ist, das zu wenigstens einer von der ersten und zweiten Schalteinheit geliefert wird, um die Anzahl von Umschaltungen während wenigstens eines Teils der Zeitperiode eines Schaltsteuerzyklus zu reduzieren.

12. Verfahren nach Anspruch 11, wobei der Stromrichter (200) einen ersten fliegenden Kondensator (225) und einen zweiten fliegenden Kondensator (226) aufweist und das Verfahren ferner aufweist: selektives Verwenden redundanter Schaltzustände der Hauptansteuersignale, die zu der ersten und zweiten Schalteinheit (228, 232, 234, 236; 238, 242, 244, 246) geliefert werden, um Spannungen des ersten fliegenden Kondensators (225) und des zweiten fliegenden Kondensators (226) in einem oder mehreren Schaltsteuerzyklen im Wesentlichen auszugleichen.

## Revendications

1. Convertisseur (200), comprenant :
un premier module convertisseur (222 ; 410) ; et
un deuxième module convertisseur (224 ; 420) couplé au premier module convertisseur (222 ; 410) d'une manière imbriquée ;
dans lequel chacun du premier module convertisseur (222 ; 410) et du deuxième module convertisseur (224 ; 420) comprend une pluralité d'unités de commutation (228, 232, 234, 236 ; 238 , 242, 244, 246) ; et
dans lequel lorsque le convertisseur (200) est exploité pour effectuer une conversion de puissance, au moins deux unités de commutation de la pluralité d'unités de commutation (228, 232, 234, 236 ; 238, 242, 244, 246) sont configurées pour être commutées aussi bien dans un régime complémentaire que dans un régime non complémentaire ;
**caractérisé en ce que** lorsque le convertisseur (200) est exploité pour effectuer une conversion de puissance, au moins un signal de commutation fourni à au moins une unité de commutation de la pluralité d'unités de commutation (228, 232, 234, 236 ; 238, 242, 244, 246) est bloqué afin de réduire les nombres de commutations pendant au moins une partie d'une période de temps d'un cycle de commande de commutation.

2. Convertisseur (200) selon la revendication 1, dans lequel le premier module convertisseur (222) et/ou le deuxième module convertisseur comprennent :
une première borne de connexion de bras transversal (239) ;
une deuxième borne de connexion de bras transversal (227) ;
une première borne de connexion de premier bras longitudinal (218) ;
une deuxième borne de connexion de premier bras longitudinal (237) ;
une première borne de connexion de deuxième bras longitudinal (229) ; et
une deuxième borne de connexion de deuxième bras longitudinal (241) ;
dans lequel au moins deux unités de commutation (234, 236) sont couplées dans des sens opposés entre la première borne de connexion de bras transversal (239) et la deuxième borne de connexion de bras transversal (227) en série ;
dans lequel au moins une première unité de commutation (228) est couplée entre la première borne de connexion de premier bras longitudinal (218) et la deuxième borne de connexion de premier bras longitudinal (237) ; et
dans lequel au moins une deuxième unité de commutation (232) est couplée entre la première borne de connexion de deuxième bras longitudinal (229) et la deuxième borne de connexion de deuxième bras longitudinal (241), et l'au moins une première unité de commutation (228) et l'au moins une deuxième unité de commutation (232) sont agencées dans le même sens.

3. Convertisseur (200) selon la revendication 2, dans lequel la première borne de connexion de bras transversal (239) de l'un des premier et deuxième modules convertisseurs (222) est électriquement couplée à une borne de connexion correspondante (219) de l'autre des premier et deuxième modules convertisseurs (224) ou est électriquement couplée à un point milieu à courant continu (CC) ; la deuxième borne de connexion de bras transversal (227) dudit un des premier et deuxième modules convertisseurs (222) est électriquement couplée à une borne de connexion correspondante de l'autre des premier et deuxième modules convertisseurs ou est électriquement couplée à un port à courant alternatif (CA) (235) ; deux bornes de connexion (237, 241) parmi les première et deuxième bornes de connexion de premier bras longitudinal et les premières et deuxième bornes de connexion de deuxième bras longitudinal dudit un des premier et deuxième modules convertisseurs (222) sont électriquement couplées à des bornes de connexion correspondantes (217, 221) de l'autre des premier et deuxième modules convertisseurs ou sont électriquement couplées à deux lignes électriques CC respectivement ; et les deux autres bornes de connexion (218, 229) parmi les première et deuxième bornes de connexion de premier bras longitudinal et les première et deuxième bornes de connexion de deuxième bras longitudinal dudit un des premier et deuxième modules convertisseurs (222) sont électriquement couplées à des bornes de connexion correspondantes de l'autre des modules convertisseurs ou sont couplées électriquement en commun au port CA (235).

4. Convertisseur (200) selon n'importe quelle revendication précédente, le convertisseur comprenant en outre :
un bras à condensateurs flottants, le bras à condensateurs flottants comprenant :
un premier condensateur flottant (225) ; et
un deuxième condensateur flottant (226) couplé en série avec le premier condensateur flottant (225), les premier et deuxième condensateurs flottants (225, 226) définissant un point milieu de condensateurs flottants (223) entre eux ; et
dans lequel une première borne du bras à condensateurs flottants est électriquement couplée à une deuxième borne de connexion de premier bras longitudinal (237) du premier module convertisseur (222) et à une première borne de connexion de premier bras longitudinal (217) du deuxième module convertisseur (224) ; une deuxième borne du bras à condensateurs flottants est électriquement couplée à une deuxième borne de connexion de deuxième bras longitudinal (241) du premier module convertisseur (222) et à une première borne de connexion de deuxième bras longitudinal (221) du deuxième module convertisseur (224) ; et le point milieu de condensateurs flottants (223) est électriquement couplé à une deuxième borne de connexion de bras transversal (239) du premier module convertisseur (222) et à une première borne de connexion de bras transversal (219) du deuxième module convertisseur (224).

5. Convertisseur (200) selon la revendication 4, dans lequel des tensions du premier condensateur flottant et du deuxième condensateur flottant (225, 226) sont sensiblement équilibrées dans un ou plusieurs cycles de commande de commutation par utilisation sélective d'états de commutation redondants des signaux de commutation fournis à la pluralité d'unités de commutation (228, 232, 234, 236 ; 238, 242, 244, 246).

6. Convertisseur (200) selon n'importe quelle revendication précédente, dans lequel le premier module convertisseur (222) a sensiblement la même structure que le deuxième module convertisseur (224), le premier module convertisseur (222) est configuré pour fournir des signaux ayant 2n₁ + 1 niveaux, le deuxième module convertisseur (224) est configuré pour fournir des signaux ayant 2n₂ + 1 niveaux, n₁ et n₂ étant supérieurs ou égaux à un, et n₁ étant égal à n₂.

7. Convertisseur selon l'une quelconque des revendications 1 à 5, dans lequel le premier module convertisseur a une structure différente de celle du deuxième module convertisseur, le premier module convertisseur est configuré pour fournir des signaux ayant 2n₁ + 1 niveaux, le deuxième module convertisseur (224) est configuré pour fournir des signaux ayant 2n₂ + 1 niveaux, n₁ et n₂ étant supérieurs ou égaux à un, et n₁ n'étant pas égal à n₂.

8. Convertisseur (200) selon n'importe quelle revendication précédente, le convertisseur comprenant :
au moins un bras longitudinal comprenant au moins une première unité de commutation (310 ; 320), l'au moins une première unité de commutation (310 ; 320) comprenant N dispositifs de commutation (316, 318, 322) connectés en série ; et
au moins un bras transversal comprenant au moins une deuxième unité de commutation (330 ; 340), l'au moins une deuxième unité de commutation (330 ; 340) comprenant M dispositifs de commutation (336, 338, 342) connectés en série, N et M étant tous les deux supérieurs à deux, et N n'étant pas égal à M.

9. Convertisseur (200) selon n'importe quelle revendication précédente, dans lequel au moins une unité de commutation de la pluralité d'unités de commutation comprend au moins deux dispositifs de commutation (316, 318, 322) qui sont connectés l'un à l'autre en série.

10. Convertisseur (200) selon la revendication 9, dans lequel chaque dispositif de commutation parmi les au moins deux dispositifs de commutation est agencé avec un circuit d'amortissement respectif (323, 325, 327), et le circuit d'amortissement (323, 325, 327) est configuré pour assurer que les au moins deux dispositifs de commutation (316, 318, 322) partagent sensiblement la même tension durant le processus de déblocage ou de blocage des dispositifs de commutation (316, 318, 322).

11. Procédé de pilotage d'un convertisseur (200), le convertisseur comprenant au moins un premier module convertisseur (222 ; 410) et un deuxième module convertisseur (224 ; 420) couplés ensemble pour former une topologie pilotée par point neutre imbriquée, le premier ou deuxième module convertisseur (222, 224 ; 410, 420) comprenant au moins une première unité de commutation et une deuxième unité de commutation, le procédé comprenant :
la fourniture d'un premier signal de pilotage principal pour piloter la première unité de commutation ; et
la fourniture d'un deuxième signal de pilotage principal pour piloter la deuxième unité de commutation afin de permettre aux première et deuxième unités de commutation d'être commutées aussi bien dans un régime complémentaire que dans un régime non complémentaire ;
le procédé étant **caractérisé par** le blocage d'au moins un signal de pilotage principal fourni à au moins une des première et deuxième unités de commutation afin de réduire les nombres de commutations pendant au moins une partie d'une période de temps d'un cycle de commande de commutation.

12. Procédé selon la revendication 11, dans lequel le convertisseur (200) comprend un premier condensateur flottant (225) et un deuxième condensateur flottant (226), le procédé comprenant en outre : l'utilisation sélective d'états de commutation redondants des signaux de pilotage principaux fournis aux première et deuxième unités de commutation (228, 232, 234, 236 ; 238, 242, 244, 246) pour équilibrer sensiblement des tensions du premier condensateur flottant (225) et du deuxième condensateur flottant (226) dans un ou plusieurs cycles de commande de commutation.
